# EUROPÄISCHE PATENTANMELDUNG

(11) **EP 4 125 237 A1**
(43) Veröffentlichungstag der Anmeldung: **01.02.2023**
(21) Anmeldenummer: 21187961.4
(22) Anmeldetag: 27.07.2021
(51) Int. Cl.: H04L 9/08

(54) **ÜBERTRAGUNG QUANTENSICHERER SCHLÜSSEL ÜBER INTERMEDIÄRE NETZWERKKNOTEN**

(71) Anmelder: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Nern, Peter-Michael

(57) **Zusammenfassung**

Die Erfindung betrifft ein Verfahren zur Übertragung quantensicherer Schlüssel zwischen einem ersten Netzwerkknoten (1) und einem zweiten Netzwerkknoten (2), welche jeweils mit Mitteln (4, 5) zur Erzeugung quantensicherer Schlüssel ausgestattet, jedoch untereinander nicht über einen Quantenkanal direkt verbunden sind. Eine als quantensicherer Nutzschlüssel in einem der Netzwercknoten (1, 2) erzeugte Zufallszahl RND wird von dem sie erzeugenden Netzwercknoten (1, 2) an den jeweils anderen Netzwerkknoten (2, 1) über einen Übertragungspfad mit mindestens einem intermediären Netzwerkknoten (3) übertragen, wobei zwischen auf dem Übertragungspfad einander unmittelbar benachbarten Netzwerkknoten jeweils ein Quantenkanal (10, 11) zum Austausch von QKD-Schlüsseln ausgebildet ist. Zwischen zwei auf dem Übertragungspfad in der Übertragungsrichtung einander folgenden Netzwerkknoten wird der Nutzschlüssel jeweils mit einer Bitsequenz übertragen, die durch Verknüpfung des Nutzschlüssels mit einem zuvor zwischen den Netzwerkknoten (1, 2) nach einem PQC-Verfahren ausgehandelten PQC-Schlüssel sowie mit einem QKD-Schlüssel, nämlich einem gemeinsamen quantensicheren Schlüssel, der beiden jeweils einander folgenden Netzwerkknoten gebildet wird.

## Beschreibung

Die Erfindung betrifft ein Verfahren zur Übertragung quantensicherer Schlüssel zwischen zwei Netzwerkknoten, welche zwar mit Mitteln zur Erzeugung von quantensicheren Schlüsseln nach einem QKD-Verfahren ausgestattet, aber untereinander direkt nicht über einen Quantenkanal verbunden sind. Die Übertragung entsprechender quantensicherer, jeweils in einem der beiden vorgenannten Netzwerkknoten erzeugter kryptographischer Schlüssel, welche diese Netzwercknoten dann für eine, einen klassischen Übertragungskanal nutzende geschützte Datenübertragung untereinander verwenden können, erfolgt daher mit Hilfe mindestens eines anderen als intermediärer Knoten fungierenden Netzwerkknotens.

Die vorgestellte Lösung ist durch die Annahme beziehungsweise durch den anerkannten Grundsatz motiviert, dass ein Kommunikationssystem als quantensicher gilt, sofern sich die Vertraulichkeit und die (vorzugsweise, das heißt im Grunde zwingend, zu überprüfende) Authentizität zwischen einem Sender und einem Empfänger übertragener Daten nicht durch Quantencomputer angreifen lässt. Entsprechendes wird nach dem derzeitigen Stand der Technik durch den Aufbau eines QKD-Systems erreicht, bei welchem die sendende und die empfangende Stelle über Mittel zur quantenmechanischen Erzeugung und zum Austausch von ihnen gemeinsam genutzter kryptographischer Schlüssel verfügen, wobei sie dazu typischerweise über einen Quantenkanal und über einen, dem Schlüsselmanagement dienenden, besonders gesicherten klassischen Kanal miteinander verbunden sind.

Im Rahmen der derzeit zur Verfügung stehenden Technik zur Nutzung der QKD-Technologie ist jedoch die Reichweite für einen nach dem QKD-Prinzip, das heißt nach einem Verfahren der Quantum Key Distribution, erfolgenden Quantenschlüssel-Austausch limitiert und auf Richtfunkverbindungen (terrestrisch oder über Satellit) beziehungsweise auf direkte Verbindungen über Glasfaserstrecken ohne optische Inlineverstärker beschränkt. In Bezug auf Letztere, also auf Glasfaserverbindungen, ergibt sich die Beschränkung der Reichweite durch die Dämpfung, welcher die zum Zweck des Schlüsselaustauschs mit geringer Leistung übertragenen Photonen in der Lichtleitfaser (des Quantenkanals) unterliegen. Hierdurch ist ein Schlüsselaustausch nach dem QKD-Prinzip unter Nutzung von Glasfaserverbindungen typischerweise nur über wenige Kilometer, aber jedenfalls nach dem Stand der Technik nicht über Entfernungen möglich, die deutlich größer sind als 100 km, also insbesondere mehrere 100 km oder gar über 1.000 km betragen.

Sofern daher zwei Netzwerkknoten, deren Entfernung voneinander eine unmittelbare Anwendung des QKD-Prinzips nicht ermöglicht, mit quantensicheren, für einen direkten verschlüsselten Datenaustausch zwischen diesen Knoten zu verwendenden Schlüsseln ausgestattet werden sollen, werden diesen Netzwerkknoten entsprechende, in einem der beiden Netzwerkknoten erzeugte Schlüssel über einen oder mehrere zwischen ihnen angeordnete intermediäre Netzwerkknoten zugestellt. Ein Nachteil dazu bisher bekannt gewordener Lösungen ist es jedoch, dass der oder die für den direkten verschlüsselten Datenaustausch zwischen den beiden nicht über einen Quantenkanal miteinander verbundenen Netzwerkknoten vorgesehenen Schlüssel auch in dem oder den zu ihrer Übertragung genutzten intermediären Netzwerkknoten vorliegen.

Dies macht es erforderlich, die betreffenden intermediären Netzwerkknoten als sogenannte Trusted Nodes beziehungsweise in einer speziellen Trusted Zone, also einer hochgesicherten Umgebung, zu betreiben. Solche speziell gesicherten Trusted Nodes oder Sicherheitsumgebungen müssen in besonderer Weise gegen einen illegalen Zutritt gesichert und überwacht werden, um zuverlässig zu verhindern, dass über sie übertragene quantensichere Schlüssel in die Hände potenzieller Angreifer gelangen. Die entsprechenden Einrichtungen sind daher typischerweise mit aufwendigen Überwachungssystemen, Schließmechanismen, Alarmanlagen, und dergleichen mehr ausgestattet und werden häufig zudem durch einen Sicherheitsdienst oder durch mit der Polizei gekoppelte Einbruchsmeldeanlagen geschützt. Jedoch sind entsprechende Sicherungs- und Überwachungsmaßnahmen mit einem beträchtlichen Aufwand und insoweit mit sehr hohen Kosten verbunden.

Ungeachtet dessen ist ein jeweiliger über einen solchen intermediären Netzwercknoten übertragener quantensicherer Schlüssel zumindest dem jeweiligen Provider, das heißt dem Betreiber des entsprechenden intermediären Knotens (und dessen Mitarbeitern), zugänglich, welchem die Nutzer der Infrastruktur, also beispielsweise eine quantensichere Schlüssel zur eigenen Nutzung zwischen Netzwerkknoten an zwei entfernten Standorten übertragende Firma oder Organisation, insoweit vollends vertrauen müssen.

Aufgabe der Erfindung ist es, eine Lösung anzugeben, welche die Übertragung eines quantensicheren Schlüssels zwischen zwei mit Mitteln zur Erzeugung quantensicher Schlüssel ausgestatteten, aber selbst nicht über einen Quantenkanal miteinander direkt verbundenen Netzwerkknoten über einen intermediären Netzwerkknoten ermöglicht, ohne dass der übertragene quantensichere Schlüssel innerhalb dieses intermediären Netzwerkknotens offengelegt wird.

Die Aufgabe wird durch ein Verfahren mit den Merkmalen des Patentanspruchs 1 gelöst. Vorteilhafte Aus- und Weiterbildungen der Erfindung sind durch die Unteransprüche gegeben.

Gemäß den vorstehenden Ausführungen und der Aufgabe geht das vorgeschlagene Verfahren von einer Konstellation aus, bei welcher mindestens ein quantensicherer Schlüssel, nämlich mindestens ein später als Nutzschlüssel zur gesicherten, insbesondere verschlüsselten Datenübertragung dienender, in Form einer Zufallszahl RND vorliegender Quantenschlüssel, zwischen zwei Netzwercknoten übertragen wird, die zwar beide zur Erzeugung quantensicherer Schlüssel (beispielsweise mittels eines Quantum Number Generators oder durch Anwendung eines QKD-Verfahrens) ausgebildet sind, also über entsprechende quantentechnische Mittel und/oder Einrichtungen verfügen, aber selbst untereinander nicht in einer direkten QKD-Beziehung stehen, also nicht durch einen Quantenkanal direkt verbunden sind, so dass die Übertragung des mindestens einen quantensicheren Nutzschlüssels, respektive einer diesen ausbildenden Zufallszahl RND, über mindestens einen intermediären Netzwerkknoten erfolgen muss.

Dieser mindestens eine intermediäre Netzwerkknoten steht als Teil des Übertragungspfades für den quantensicheren Schlüssel (Nutzschlüssel) sowohl mit einem auf diesem Übertragungspfad vorhergehenden als auch mit einem auf dem Übertragungspfad nachfolgenden Netzwerkknoten in Verbindung. Darüber hinaus ist zwischen auf dem Übertragungspfad einander unmittelbar benachbarten Netzwerkknoten jeweils ein Quantenkanal zum Austausch von QKD-Schlüsseln, das heißt von nach einem QKD-Verfahren erzeugten quantensicheren Schlüsseln ausgebildet.

Gemäß dem Verfahren wird der mindestens eine Nutzschlüssel zwischen zwei auf dem Übertragungspfad in der Übertragungsrichtung des mindestens einen Nutzschlüssels einander folgenden Netzwerkknoten jeweils - das heißt also von einem jeweiligen Netzwerkknoten an den ihm folgenden - mit einer unter Einbeziehung des mindestens einen Nutzschlüssels gebildeten Bitsequenz übertragen. Hierbei wird die vorgenannte zur Übertragung des mindestens einen Nutzschlüssels dienende Bitsequenz gebildet durch Verknüpfung des mindestens einen Nutzschlüssels mit einem zuvor zwischen dem den mindestens einen Nutzschlüssel erzeugenden sowie aussendenden Netzwerkknoten und dem für dessen Empfang bestimmten Netzwerkknoten nach einem Verfahren der Post Quantum Cryptography (PQC) ausgehandelten PQC-Schlüssel sowie mit einem QKD-Schlüssel, nämlich einem nach einem QKD-Verfahren erzeugten, gemeinsamen quantensicheren Schlüssel der beiden einander folgenden Netzwerkknoten.

Allerdings verfügen nur der den mindestens einen Nutzschlüssel aussendende Netzwerkknoten und der für dessen Empfang bestimmte Netzwerkknoten über den vorgenannten PQC-Schlüssel. Daher liegt der mindestens eine Nutzschlüssel innerhalb des oder der intermediären Netzwerkknoten des Übertragungspfades stets nur als eine durch Verknüpfung mit dem genannten PQC-Schlüssel gebildete Bitsequenz vor und wird demgemäß zwischen den Einheiten eines jeweiligen intermediären Netzwerkknotens, also innerhalb des betreffenden Netzwerkknotens ausschließlich in dieser Form übertragen. Hierdurch kann der mindestens eine Nutzschlüssel (im Weiteren soll sprachlich vereinfachend von dem, respektive von einem Nutzschlüssel gesprochen werden) innerhalb eines intermediären Netzwerkknoten und somit auf dem Übertragungspfad zwischen dem ihn aussendenden und dem für seinen Empfang bestimmten Netzwerkknoten nicht kompromittiert werden. Letztlich müssen selbstverständlich Netzwerkknoten beispielsweise eines Kernnetzes, insbesondere Netzwerknoten mit einer QKD-Architektur, wie intermediäre Netzwerkknoten der zuvor betrachteten Art dennoch immer in geeigneter Weise gegen Angriffe gehärtet werden. Bei letzteren, also den intermediären Netzwerkknoten, könnte sich aber der hierfür zu betreibende Aufwand bei Einsatz des erfindungsgemäßen Verfahrens zumindest teilweise verringern.

Was die zuvor angesprochene Verknüpfung der genannten Schlüssel zur Bildung der zur Übertragung des mindestens einen Nutzschlüssels genutzten Bitsequenz anbelangt, so kann diese beispielsweise darin bestehen, dass die Schlüssel miteinander bitweise XOR-verknüpft werden. Drüber hinaus kommt aber auch die Anwendung bekannter Verschlüsselungsalgorithmen unter Einsatz der genannten Schlüssel, also einschließlich des zu übertragenden Nutzschlüssels, in Betracht.

Im Hinblick auf die vorstehend angesprochene sprachliche Vereinfachung, wonach in den nachfolgenden Ausführungen im Allgemeinen von einem quantensicheren Nutzschlüssel gesprochen wird, ist an dieser Stelle ausdrücklich zu betonen, dass unter Anwendung des erfindungsgemäßen Verfahrens mit einem Übertragungsvorgang selbstverständlich auch mehrere quantensichere Schlüssel gleichzeitig von einem der Netzwerkknoten über den mindestens einen intermediären Netzwerkknoten an den anderen Netzwerkknoten übertragen werden können. Dies kann dadurch geschehen, dass mit der einmaligen Ausführung des Verfahrens mehrere zu einer Bitsequenz zusammengefügte quantensichere Schlüssel als Nutzschlüssel übertragen werden, wobei diese Bitsequenz neben diesen mehreren Nutzschlüsseln vorzugsweise außerdem Abschnitte enthält, welche jeweils einen der in ihr enthaltenen Nutzschlüssel eindeutig bezeichnenden Identifikator darstellen. Bei dem für ihren Empfang bestimmten Netzwerkknoten können aus der eingehenden Zeichenkette mit "dem Wissen" über die Länge eines einzelnen Schlüssels, beispielsweise auf der Basis eines Regelwerks, die einzelnen Schlüssel (Nutzschlüssel) und die sie bezeichnenden Identifikatoren extrahiert werden.

Bei den beiden den Nutzschlüssel zur späteren Verwendung für die Verschlüsselung von Nutzdaten (zu denen gegebenenfalls auch weitere Schlüssel zählen können) über einen oder mehrere intermediäre Netzwerkknoten austauschenden Netzwerkknoten kann es sich beispielsweise auch um Netzwerkknoten an zwei Standorten eines Unternehmens handeln. In diesem Falle kann es seitens des betreffenden Unternehmens eventuell gewünscht sein, dass es Dritten - und hierbei sogar auch Mitarbeitern der oder des Betreiber(s) des/der intermediären Netzwerkknoten(s) - absolut unmöglich ist, sich an technischen Einrichtungen eines intermediären Netzwerkknotens Zugriff auf den Nutzschlüssel zu verschaffen. Auch dies kann durch die Erfindung sichergestellt werden, da der Nutzschlüssel selbst, das heißt in unverknüpfter Form, eben nur bei den beiden ihn zu seiner Verwendung austauschenden Netzwerkknoten, als den Endpunkten des bereits mehrfach angesprochenen Übertragungspfades, vorliegt.

Die Verwendung des Begriffs Nutzschlüssel, für den entsprechend dem erfindungsgemäßen Verfahren über den Übertragungspfad mit dem mindestens einen intermediären Netzwerkknoten zu übertragenden quantensicheren Schlüssel, dient dazu, diesen Schlüssel sprachlich von anderen Schlüsseln zu unterscheiden, die bei dem Verfahren und seinen möglichen Ausgestaltungsformen in Zusammenhang mit der Übertragung dieses Nutzschlüssels zum Einsatz gelangen. Im Hinblick auf die von dem Nutzschlüssel zu unterscheidenden Schlüssel seien beispielsweise Schlüssel, vorzugsweise quantensichere Schlüssel angesprochen, welche beispielsweise bei der bitweisen XOR-Verknüpfung mit dem Nutzschlüssel zum Zweck der Bildung der seiner Übertragung über den mindestens einen intermediären Netzwerkknoten umfassenden Übertragungspfad dienenden Bitsequenz verwendet werden. Insoweit sei angemerkt, dass es für eine einen Schlüssel darstellende oder einen solchen Schlüssel aufnehmende Bitsequenz als solches im Grunde nicht feststellbar ist, nach welchem Prinzip der betreffende Schlüssel gebildet wurde (zum Beispiel QKD oder PQC) oder zu welchem Zweck er später verwendet werden soll oder ob die Bitsequenz durch eine Verknüpfung, insbesondere eine bitweise XOR-Verknüpfung von Schlüsseln entstanden ist.

Zusammenfassend sei daher nochmals betont, dass es sich bei dem unter Nutzung des Verfahrens über den mindestens einen intermediären Netzwerkknoten zu übertragenden Nutzschlüssel jedenfalls um einen quantensicheren Schlüssel (Quantenschlüssel) handelt. Bei dem zu seiner Übertragung über den Übertragungspfad insbesondere im Zusammenhang mit der Bildung von bitweisen XOR-Verknüpfungen verwendeten Schlüsseln kann es sich hingegen um quantensichere, beispielsweise nach einem QKD-Verfahren erzeugte Schlüssel oder um auch als Shared Secret bezeichnete PQC-Schlüssel, das heißt nach einem Verfahren der Post Quantum Cryptography zwischen den beiden den Nutzschlüssel austauschenden Netzwerkknoten ausgehandelte Schlüssel, handeln.

Zu diesen Erläuterungen der verwendeten Begrifflichkeiten sei ergänzend noch angemerkt, dass die Begriffe quantensicherer Schlüssel und Quantenschlüssel in der Beschreibung und in den Patentansprüchen grundsätzlich synonym gebraucht werden, ihnen also ein synonymes Verständnis zugrunde liegt. Tendenziell wird hier aber im Zusammenhang mit dem mithilfe des intermediären Netzwerkknotens zu übertragenden Nutzschlüssel von einem quantensicheren Schlüssel und im Zusammenhang mit den gemeinsam bei dem intermediären Netzwerkknoten und dem vorhergehenden Netzwerkknoten oder mit den gemeinsam bei dem intermediären Netzwerkknoten und dem ihm nachfolgenden Netzwerkknoten vorliegenden Schlüssel ― sofern hierbei ein QKD-Verfahren zum Einsatz gelangt ― von einem Quantenschlüssel gesprochen. Auch dies dient ausschließlich der sprachlichen Unterscheidung. Ein technischer Unterschied ist hiermit nicht verbunden.

Schließlich sei noch betont, dass es sich bei einer im Kontext der Darstellungen zur Erfindung angesprochenen XOR-Verknüpfung stets um eine bitweise XOR-Verknüpfung handelt, und zwar auch, wenn dies einmal nicht ausdrücklich angegeben sein sollte.

Im Falle einer Übertragung eines Nutzschlüssels von dem ihn erzeugenden Netzwerkknoten an den für seinen Empfang bestimmten Netzwerkknoten über einen Übertragungspfad mit einem intermediären Netzwerkknoten kann sich der Entsprechende Übertragungsvorgang beispielsweise wie folgt gestalten:
a.) Der quantensichere Nutzschlüssel wird von dem ihn erzeugenden und aussendenden Netzwerkknoten an den ihm bezogen auf die Übertragungsrichtung dieses Nutzschlüssels nachfolgenden Intermediären Netzwerkknoten übertragen. Genauer gesagt wird an einen eingangsseitigen Verschlüsseler/Entschlüsseler des intermediären Netzwerkknotens übertragen, und zwar mit einer Bitsequenz übertragen wird, welche von dem den Nutzschlüssel aussendenden Netzwerkwerkknoten gebildet wird durch eine bitweise XOR-Verknüpfung des Nutzschlüssels mit einem bei diesem Netzwerkknoten selbst und bei dem intermediären Netzwerkknoten als gemeinsamer Schlüssel vorliegenden QKD-Schlüssel sowie mit einem zuvor zwischen dem den Nutzschlüssel aussendenden Netzwerkknoten und dem für dessen Empfangs bestimmten Netzwerkknoten ausgehandelten PQC-Schlüssel.
b.) Die gemäß a) gebildete Bitsequenz wird von dem sie empfangenden eingangsseitigen Verschlüsseler/Entschlüsseler des intermediären Netzwerkknotens abermals mit dem bereits im Schritt a) verwendeten gemeinsamen, sowohl bei dem den Nutzschlüssel aussendenden als auch bei dem intermediären Netzwerkknoten vorliegenden QKD-Schlüssel XOR-verknüpft. Anschließend wird die dabei entstehende Bitsequenz innerhalb des intermediären Netzwerkknotens an einen ausgangsseitigen Verschlüsseler/Entschlüsseler übertragen.
c.) Durch den ausgangsseitigen Verschlüsseler/Entschlüsseler des intermediären Netzwerkknotens wird aus der durch ihn von dem eingangsseitigen Verschlüsseler/Entschlüsseler empfangenen Bitsequenz eine neue Bitsequenz gebildet. Dies geschieht durch bitweise XOR-Verknüpfung der vom ausgangsseitigen Verschlüsseler/Entschlüsseler empfangenen Bitsequenz mit einem gemeinsamen, bei dem intermediären Netzwerkknoten und bei dem für den Empfang des Nutzschlüssels bestimmten Netzwerkknoten vorliegenden QKD-Schlüssel. Die solchermaßen entstehende neue Bitsequenz wird von dem intermediären Netzwerkknoten an den für den Empfang des Nutzschlüssels bestimmten Netzwerkknoten ausgesendet.
d.) In dem für seinen Empfang bestimmten Netzwerkknoten wird aus der durch diesen Netzwerkknoten von dem intermediären Netzwerkknoten empfangen Bitsequenz der Nutzschlüssel extrahiert. Dies geschieht durch bitweise XOR-Verknüpfung der von intermediären Netzwerkknoten empfangenen Bitsequenz mit einem nach einem QKD-Verfahren erzeugten, bei dem empfangenden Netzwerkknoten und bei dem intermediären Netzwerkknoten vorliegenden gemeinsamen QKD-Schlüssel sowie bitweise XOR-Verknüpfung mit dem schon angesprochenen, zwischen den beiden den Nutzschlüssel zur späteren Verwendung austauschenden Netzwerkknoten ausgehandelten PQC-Schlüssel. Letzteres erfolgt im Verschlüsseler/Entschlüsseler des für den Empfang des Nutzschlüssels bestimmten Netzwerkknoten.

Das, wie gesagt vor der Übertragung des Nutzschlüssels erfolgte Aushandeln dieses PQC-Schlüssels zwischen den beiden später mit dessen Hilfe den Nutzschlüssel austauschenden Netzwerkknoten geschieht vorzugsweise unter Nutzung eines Encapsulation Algorithmus. Bestandteil bekannter und auch im Rahmen der Erfindung hierfür herangezogener Verfahren ist es typischerweise, dass die beiden einen oder mehrere PQC-Schlüssel untereinander aushandelnden Seiten - hier die beiden später den quantensicheren Nutzschlüssel unter Verwendung des ausgehandelten PQC-Schlüssels übertragenden Netzwerkknoten - sich vor der eigentlichen Aushandlung des Schlüssels untereinander authentifizieren. Dies geschieht beispielsweise mittels eines PQC-Signierverfahrens, wobei auch hierfür bereits eine Reihe von Verfahren bekannt ist. Darüber hinaus besteht die Möglichkeit, dass sich die beiden den quantensicheren Nutzschlüssel nach dem hier vorgeschlagenen Verfahren über mindestens einen intermediären Knoten übertragenden Netzwerknoten, insbesondere im Hinblick auch im Hinblick auf den Austausch des mindestens einen dafür zu verwendenden PQC-Schlüssels, mittels unter Anwendung der PQC generierter Zertifikate oder mittels PQ hybrider Zertifikate authentifizieren. Bei letzteren handelt es sich um Zertifikate, welche unter Übertragung von PQC-Techniken auf klassische Zertifizierungsprotokolle, wie X.509, generiert werden. Der Einsatz derartiger Zertifikate könnte insbesondere im Zusammenhang mit der Umrüstung bereits bestehender Strukturen und deren Ertüchtigung zur Nutzung des hier beschriebenen Verfahrens vorteilhaft sein.

Das vorgeschlagene Verfahren kann weiterhin so ausgestaltet sein, dass die den Nutzschlüssel über den (mindestens einen) intermediären Netzwerkknoten gemäß diesem Verfahren austauschenden Netzwerkknoten für diesen Zweck eine Mehrzahl von entweder nur jeweils einmal verwendeten oder nur für eine festgelegte Zeit oder Anzahl von Übertragungen geltenden PQC-Schlüsseln aushandelt.

Wie bereits mehrfach ausgeführt, dient der zwischen den Netzwerkknoten nach dem Verfahren ausgetauschte quantensichere Nutzschlüssel zur Übertragung mittels seiner verschlüsselter Nutzdaten. Dies schließt die Möglichkeit ein, dass ein erster zwischen den Netzwerkknoten übertragener Nutzschlüssel dazu verwendet wird, weitere in einem der beiden Netzwerkknoten quantentechnisch erzeugte Nutzschlüssel zu verschlüsseln und über einen klassischen Kanal an den jeweils anderen der beiden Netzwerkknoten zu übertragen. Der mindestens eine zwischen den Netzwerkknoten übertragene Nutzschlüssel kann durch den ihn erzeugenden und unter Nutzung des erfindungsgemäßen Verfahrens an den anderen Netzwerkknoten übertragenden Netzwerkknoten beispielsweise mittels eines Quantenzufallszahlengenerators generiert werden.

Nachfolgend soll ein Ausführungsbeispiel der Erfindung gegeben und im Zusammenhang mit einer Zeichnung sowie im Vergleich zum Stand der Technik erläutert werden. Die zugehörigen Zeichnungen zeigen:
- Fig. 1:: ein Beispiel für die Anwendung des erfindungsgemäßen Verfahrens in einer möglichen Netzwerkkonfiguration,
- Fig. 2:: die Abläufe bei der Übertragung eines Schlüssels über einen intermediären Netzwerkknoten nach dem Stand der Technik.

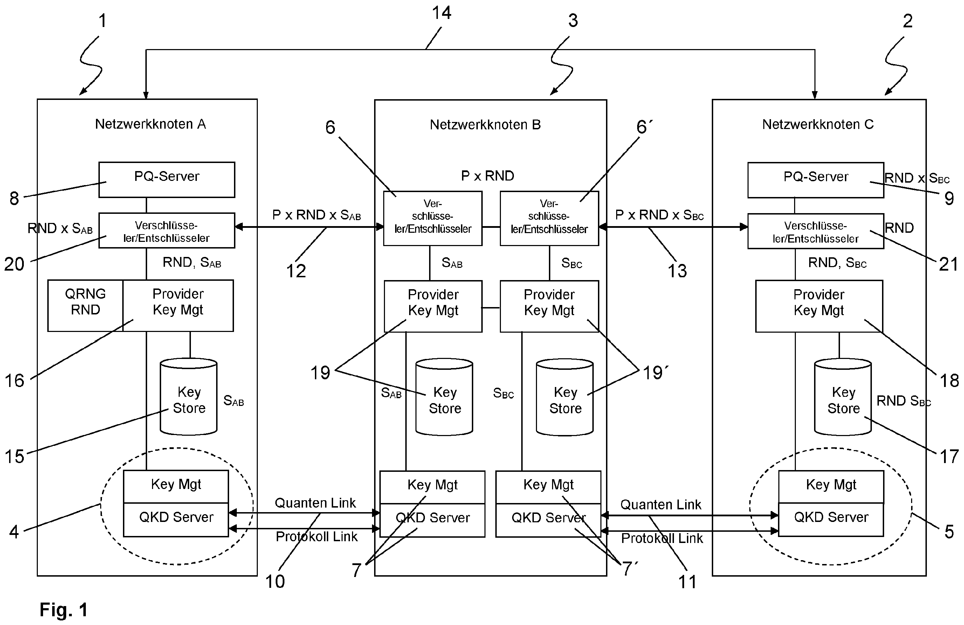

Die Fig. 1 zeigt in einer schematischen Darstellung eine mögliche Netzwerkkonfiguration, anhand welcher die Anwendung und der Ablauf des erfindungsgemäßen Verfahrens nochmals beispielhaft erläutert werden sollen. Wesentliche Bestandteile der dargestellten Netzwerkkonfiguration sind ein erster Netzwercknoten 1 (Netzwerkknoten A) und ein zweiter Netzwerkknoten 2 (Netzwerkknoten C), zwischen denen Daten sicher durch Verschlüsselung mit einem unter Verwendung eines in einem dieser Netzwerkknoten 1, 2 erzeugten quantensicheren Schlüssels (Nutzschlüssel) übertragen werden sollen, sowie ein intermediärer Netzwerkknoten 3 (Netzwerkknoten B), über den die beiden Netzwerkknoten 1, 2 diesen Nutzschlüssel nach dem erfindungsgemäßen Verfahren austauschen. Wie aus der Figur erkennbar ist, verfügen die beiden Netzwerkknoten 1, 2 jeweils über Mittel 4, 5 zur Erzeugung und zum Austausch quantensicherer Schlüssel, wobei sie jedoch untereinander nicht über einen Quantenkanal direkt miteinander verbunden sind, so dass sie quantensichere Schlüssel nicht unter Anwendung eines QKD-Verfahrens direkt untereinander austauschen können.

Bei den zuvor angesprochenen in jedem der beiden Netzwerkknoten 1, 2 ausgebildeten Mitteln 4, 5 zur Erzeugung quantensicherer Schlüssel handelt es sich in dem gezeigten Beispiel unter anderem um je einen in den Netzwerkknoten 1, 2 vorhandenen QKD-Server, welcher zum Austausch quantensicherer Schlüssel unter Nutzung eines QKD-Verfahrens über einen Quantenkanal 10, 11 mit einem anderen QKD-Server verbunden ist. Jedoch besteht, wie bereits ausgeführt, kein Quanten-Link zu dem jeweiligen QKD-Server des anderen der beiden Netzwercknoten 1, 2. Vielmehr handelt es sich bei dem jeweiligen (anderen) QKD-Server, mit welchem der jeweilige, als Teil von Mitteln 4, 5 zur Erzeugung quantensicherer Schlüssel ausgebildete QKD-Server des betreffenden der beiden Netzwercknoten 1, 2 verbunden ist, um einen QKD-Server, der als Teil von Mitteln 7, 7' zur Erzeugung quantensicherer Schlüssel in dem intermediären Netzwerkknoten 3 ausgebildet und angeordnet ist, über welchen der in einem der beiden Netzwercknoten 1, 2 erzeugte quantensichere Schlüssel (Nutzschlüssel) an den anderen, mit ihm nicht direkt über einen Quantenkanal verbundenen Netzwerkknoten 2, 1 übertragen wird. Bei den Mitteln 4, 5 der Netzwerkknoten 1, 2 handelt es sich ebenso wie bei den Mitteln 7, 7' des intermediären Netzwerkknotens 3 um Komponenten (Key Mgt = Key Management, QKD Server) eines herstellerspezifischen QKD-Managements- und Systems, also um Komponenten deren Beschaffenheit durch Ihren jeweiligen Hersteller bestimmt und nur diesem bekannt sind.

Nur der Vollständigkeit halber - für die Erfindung aber nicht relevant - sei darauf hingewiesen, dass jedem der beiden Quantenkanäle 10, 11 (Quanten Link) ein für die Aushandlung von QKD-Kanälen benötigter Protokolllink zugeordnet ist. Es handelt sich hierbei um einen speziell gesicherten klassischen, respektive konventionellen Kanal, über den keine Quantenzustände, sondern elektronische oder optische Signale übertragen werden.

Zur Durchführung des erfindungsgemäßen Verfahrens sind die beiden Netzwercknoten 1, 2, über die Mittel zur Erzeugung quantensicherer Schlüssel und einen Verschlüsseler/Entschlüsseler 20, 21 hinaus, jeweils mit einem PQC-Server 8, 9 ausgestattet. Mit Hilfe dieser PQC-Server 8, 9 können die beiden Netzwerkknoten 1, 2 unter Nutzung eines konventionellen, das heißt nicht als Quantenkanal ausgebildeten und somit nicht QKD-fähigen Datenkanals miteinander Schlüssel aushandeln, welche nach heutigem Kenntnisstand ebenfalls als quantensicher gelten. Im Kontext der hier gegebenen Beschreibung werden diese Schlüssel jedoch, abweichend von dem oder den mittels eines QKD-Systems erzeugten und über einen Quantenkanal austauschten quantensicheren Schlüssel(n), "als quantensicher geltende Schlüssel" oder verkürzend und insoweit vereinfachend als "PQC-Schlüssel" bezeichnet werden.

Der zuvor angesprochene konventionelle Kanal kann unter Nutzung eines gesonderten, nicht über den intermediären Netzwerkknoten 3 geführten Übertragungspfades 14 realisiert sein. Er kann aber auch, ebenso wie der zur späteren Übertragung des Nutzschlüssels genutzte Kanal 12, 13 physisch, das heißt insbesondere auf der Verbindungsschicht des OSI-Modells, über den Netzwerkknoten 3 geführt sein, wobei jedoch innerhalb des intermediären Netzwerkknotens 3 kein Zugriff auf die auf höheren Schichten des OSI-Modells zur Aushandlung von PQC-Schlüsseln zwischen den Netzwerkknoten 1, 2 übertragenen Daten gegeben ist.

Zur Anwendung des Verfahrens wird zunächst zwischen den Netzwerkknoten 1, 2, unter Übertragung dazu erforderlicher Daten über den schon angesprochenen konventionellen Kanal (bestehender Pfad 12, 13 oder gesonderter Pfad 14), zumindest ein PQC-Schlüssel ausgehandelt. Letztliches Ziel ist es jedoch - und dies sei an dieser Stelle nochmals ausdrücklich betont - zwischen den beiden Netzwerkknoten 1, 2 mindestens einen Schlüssel (Nutzschlüssel) auszutauschen, welcher unter Nutzung eines QKD-Systems oder eines Quantengenerators oder eines Quantencomputers erzeugt wurde und insofern auf jeden Fall quantensicher ist und nicht "nur" als quantensicher gilt. Der betreffende (mindestens eine) quantensichere Schlüssel wird dabei über den intermediären Netzwerkknoten 3 übertragen, wobei dies jedoch unter Einsatz des erfindungsgemäßen Verfahrens so geschieht, dass dieser (mindestens eine) quantensichere Schlüssel in dem intermediären Netzwerkknoten 3 weder offengelegt wird noch zugänglich ist.

Für die nachfolgenden Darstellungen soll sprachlich vereinfachend anstelle von mindestens einem quantensicheren Schlüssel wiederum stets von einem quantensicheren Schlüssel gesprochen werden, wobei aber ausdrücklich zu betonen ist, dass unter Anwendung der dargestellten Übertragungsvorgänge selbstverständlich auch mehrere quantensichere Schlüssel von einem der Netzwerkknoten 1 über den intermediären Netzwerkknoten 3 an den anderen Netzwerkknoten 2 übertragen werden können. Letzteres kann sowohl durch mehrfach aufeinanderfolgende Ausführung der nachfolgend beschriebenen Übertragungsvorgänge als auch dadurch geschehen, dass mit der einmaligen Ausführung dieser Übertragungsvorgänge mehrere zu einer Bitsequenz zusammengefügte quantensichere Schlüssel übertragen werden, wobei diese Bitsequenz vorzugsweise außerdem Abschnitte enthält, welche jeweils einen der in ihr enthaltenen quantensicheren Nutzschlüssel eindeutig bezeichnenden Identifikator kodieren.

Auch ist darauf hinzuweisen, dass hier zur Erläuterung der Abläufe nur beispielhaft von einer Übertragungsrichtung ausgegangen wird, bei welcher der Nutzschlüssel in dem Netzwerkknoten 1 (Netzwerkknoten A) erzeugt wird und über den intermediären Netzwerkknoten 3 (Netzwerkknoten B) an den Netzwerkknoten 2 (Netzwerkknoten C) übertragen wird. Selbstverständlich kann das Ganze auch in umgekehrter Richtung, also Übertragung eines im Netzwerkknoten 2 erzeugten quantensicheren Nutzschlüssels an den Netzwerkknoten 1 erfolgen, ohne dass sich deshalb grundsätzlich andere Verfahrensabläufe vollziehen würden.

In den nachstehend für die Übertragung eines quantensicheren Nutzschlüssels erläuterten Abläufen stehen ,P' für einen PQC-Schlüssel, ,RND' für den quantensicheren Nutzschlüssel, ,X' für eine bitweise XOR-Verknüpfung sowie ,S_{AB}' und ,S_{BC}' für einen gemeinsamen QKD-Schlüssel von Netzwerkknoten 1 und intermediärem Netzwerkknoten 3 (S_{AB}), respektive von intermediärem Netzwerkknoten 3 und Netzwerkknoten 2 (S_{BC}). Die Übertragung eines quantensicheren, beispielsweise in dem Netzwerkknoten 1 (Netzwerkknoten A) erzeugten Nutzschlüssels (Zufallszahl ,RND') an den Netzwerkknoten 2 (Netzwerkknoten C) gestaltet sich wie folgt.

Der in dem Netzwerkknoten 1 erzeugte quantensichere Nutzschlüssel, bei dem es sich um eine in der Darstellung mit ,RND' bezeichnete Bitsequenz handelt, wird in dem Netzwerkknoten 1 in der Verschlüsselungskomponente des Verschlüsselers/Entschlüsselers 20 bitweise mit zwei anderen Bitsequenzen XOR-verknüpft. Bei diesen beiden Bitsequenzen handelt es sich zum einen um einen (ebenfalls quantensicheren) Schlüssel S_{AB}, der aufgrund eines über den zwischen dem Netzwerkknoten 1 und dem intermediären Netzwerkknoten 3 bestehenden Quantenkanal 10 erfolgenden Schlüsselaustausches nach einem QKD-Verfahren sowohl in dem Netzwerkknoten 1 als auch in dem intermediären Netzwerkknoten 3 vorliegt. Zum anderen erfolgt eine bitweise XOR-Verknüpfung des zwischen den Netzwerkknoten 1, 3 zu übertragenden quantensicheren Schlüssels, respektive der ebenfalls durch bitweise XOR-Verknüpfung gegebenenfalls bereits gebildeten Bitsequenz aus quantensicherem Schlüssel und gemeinsamem QKD-Schlüssel der Netzwerkknoten 1, 3 mit dem bereits zuvor angesprochenen, vorher zwischen den Netzwerkknoten 1, 2 und deren PQC-Servern 8, 9 ausgehandelten PQC-Schlüssel.

Diese Bitsequenz, nämlich P X RND X S_{AB} wird durch den Netzwerkknoten 1, respektive durch die Verschlüsselungskomponente seines Verschlüsselers/Entschlüsselers 20, über einen konventionellen Datenübertragungskanal 12 an den intermediären Netzwerkknoten 3 übertragen. Der ursprünglich unter Einsatz der Mittel 4 des Netzwerkknotens 1 und der Mittel 7 des intermediären Netzwerkknotens 3 erzeugte QKD-Schlüssel S_{AB} wird durch Mittel 16 des Netzwerkknotens 1 im Zusammenwirken mit Mitteln 19 des intermediären Netzwercknotens aus einem Schlüsselspeicher 15 (seitens des Netzwerkknotens 3 ein Schlüsselspeicher Key Store als Teil von 19) unter Verwendung eines ihn eindeutig bezeichnenden Identifikators bereitgestellt. Bei den Mitteln 16, 19 und dem Schlüsselspeicher 15 handelt es sich jeweils um Komponenten eines providerspezifischen Schlüsselmanagements also um Mittel, die von dem Betreiber (Provider) des jeweiligen Netzwerkknotens verwaltet werden und ausschließlich ihm zugänglich sind.

Der die von dem Netzwerkknoten 1 ausgesendete Bitsequenz empfangende Verschlüsseler/Entschlüsseler 6 des intermediären Netzwerkknotens 3 verknüpft die empfangene Bitsequenz seinerseits abermals mit dem gemeinsam bei ihm und dem Netzwerkknoten 1 vorliegenden QKD-Schlüssel S_{AB}. Innerhalb des intermediären Netzwerkknotens 3 liegt somit die Bitsequenz P X RND vor, welche von dem vorgenannten Verschlüsseler/Entschlüsseler 6 in dieser Form an einen in Bezug auf die hier betrachtete Übertragungsrichtung ausgangsseitig des intermediären Netzwerkknotens angeordneten weiteren Verschlüsseler/Entschlüsseler 6' übertragen wird. In diesem ausgangsseitigen Verschlüsseler/Entschlüsseler 6' wird die von ihm empfangene Bitsequenz, also P X RND, bitweise XOR-verknüpft mit einem bei dem intermediären Netzwerkknoten 3 und dem Netzwerkknoten 2 gemeinsam vorliegenden QKD-Schlüssel S_{BC}. Die dabei entstehende Bitsequenz wird wiederum über einen konventionellen Datenübertragungskanal 13 von dem ausgangsseitigen Verschlüsseler/Entschlüsseler 6' des intermediären Netzwerkknotens 3 an den Netzwerkknoten 2 übertragen. Der ursprünglich unter Einsatz der Mittel 5 des Netzwerkknotens 2 und der Mittel 7' des intermediären Netzwerkknotens 3 erzeugte QKD-Schlüssel S_{BC} wird durch Mittel 18 des Netzwerkknotens 2 im Zusammenwirken mit Mitteln 19' des intermediären Netzwerkknotens aus einem Schlüsselspeicher 17 (seitens des Netzwerkknotens 3 der Schlüsselspeicher Key Store als Teil von 19') unter Verwendung eines ihn eindeutig bezeichnenden Identifikators bereitgestellt. Bei den Mitteln 18, 19 und dem Schlüsselspeicher 17 handelt es sich jeweils wiederum um Komponenten eines providerspezifischen Schlüsselmanagements also um Mittel, die von dem Betreiber (Provider) des jeweiligen Netzwerkknotens verwaltet werden und ausschließlich ihm zugänglich sind.

In dem Netzwerkknoten 2 wird schließlich die von dem intermediären Netzwercknoten 3 eingehende Bitsequenz nach ihrem Empfang wiederum zweifach bitweise XOR-verknüpft, nämlich zum einen wiederum mit dem gemeinsam bei dem intermediären Netzwerkknoten 3 und dem Netzwerkknoten 2 vorliegenden QKD-Schlüssel S_{BC} und zum anderen mit dem bei dem ersten, aussendenden Netzwerkknoten 1 und bei dem zweiten, empfangenden Netzwerkknoten 2 gemeinsam vorliegenden (zuvor ausgetauschten) PQC-Schlüssel ,P'. Im Ergebnis liegt dann bei dem Netzwerkknoten der quantensichere QKD-Schlüssel ,RND' vor und kann später für einen quantensicher verschlüsselten Datenaustausch zwischen den Netzwerkknoten 1, 2 verwendet werden.

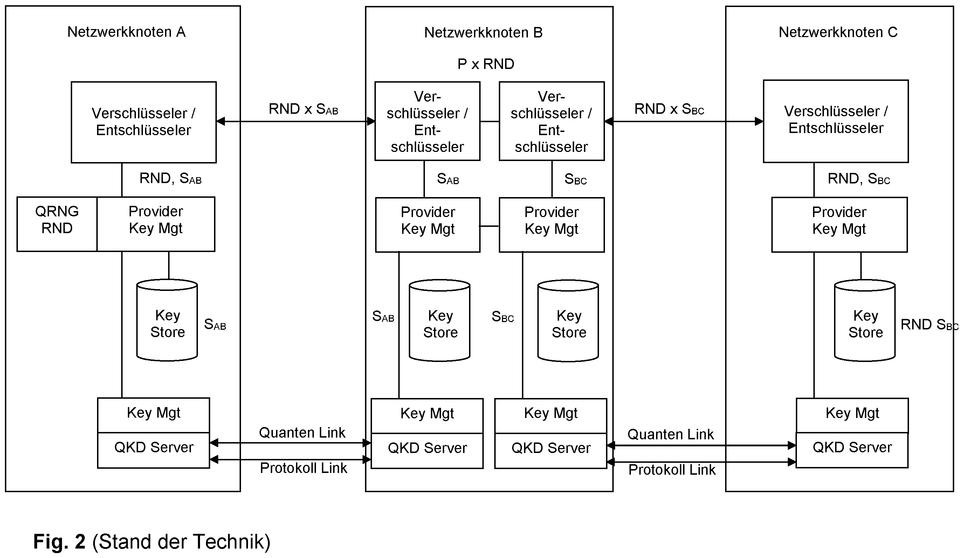

Demgegenüber zeigt die Fig. 2, ebenfalls in einer schematischen Darstellung, eine Netzwerkkonfiguration mit nicht über einen PQC-Server verfügenden (oder einen solchen nicht für den Austausch quantensicherer Nutzschlüssel einsetzenden) Netzwerkknoten (Netzwerkknoten A und C) und die sich bei der Übertragung eines quantensicheren Nutzschlüssels ,RND' über den intermediären Netzwerkknoten B ohne Anwendung des erfindungsgemäßen Verfahrens, das heißt nach dem Stand der Technik vollziehenden Abläufe. Auch hier steht der intermediäre Netzwerkknoten (Netzwerkknoten B) mit den benachbarten Netzwerkknoten über einen Quanten-Link mit zugehörigem Protokoll-Link in einer QKD-Beziehung. Da es sich bei der in der Fig. 2 gezeigten Konfiguration und den sich vollziehenden, symbolisch dargestellten Abläufen um den Stand der Technik handelt, wurde in dieser Figur bewusst auf das Antragen von Bezugszeichen verzichtet.

Bezogen auf den Übertragungspfad zur Übertragung des quantensicheren Nutzschlüssels verfügt der intermediäre Netzwerkknoten eingangsseitig und ausgangsseitig ebenfalls jeweils über einen Verschlüsseler/Entschlüsseler. Mittels des eingangsseitigen Verschlüsseler/Entschlüsseler (für den Fall einer Übertragung in der Übertragungsrichtung von A nach C, links im Netzwerkknoten B) und des zugehörigen Provider Key Managements, das heißt des providerspezifischen Schlüsselmanagements, mit zugehörigem Schlüsselspeicher wird eine durch den intermediären Netzwerkknoten von einem ihm auf dem Übertragungspfad vorhergehenden Netzwerkknoten (zum Beispiel Netzwerkknoten A) empfangene Bitsequenz, bei welcher es sich um eine bitweise XOR-Verknüpfung des zu übertragenden Nutzschlüssels mit einem gemeinsamen Quantenschlüssel des intermediären Netzwerkknotens und des vorhergehenden Netzwerkknotens handelt, (abermals) mit demselben, aufgrund der Nutzung des QKD-Prinzips, sowohl in dem intermediären Netzwerkknoten als auch in dem vorhergehenden Netzwercknoten vorliegenden Quantenschlüssel durch bitweise Anwendung des XOR-Operators verknüpft. Im Ergebnis dessen liegt der zu übertragende quantensichere Nutzschlüssel RND zwar nicht auf dem Übertragungsweg zwischen den Netzwerkknoten A und B nicht offen vor, ist aber hinter dem eingangsseitigen Verschlüsseler/Entschlüsseler innerhalb des intermediären Netzwerkknotens B für den Provider, als den Betreiber des Netzwerkknotens zugänglich.

Daher muss dieser intermediäre Netzwerkknoten mit geeigneten Mitteln gesichert, nämlich als Trusted Node ausgebildet, respektive der gesamte Netzwercknoten in einer Trusted Zone angeordnet werden, um einen Zugriff potenzieller Angreifer auf diesen quantensicheren Nutzschlüssel sicher zu verhindern. Ungeachtet dessen ist aber der Nutzschlüssel dem Provider, das heißt dem Betreiber des intermediären Netzwerkknotens (Netzwerkknoten B) und dessen Mitarbeitern, zugänglich, wobei ein Nutzer, das heißt ein Verwender des quantensicheren Nutzschlüssels, folglich absolutes Vertrauen in den Provider haben muss, dass dieser einen illegalen Zugriff auf den Nutzschlüssel durch Dritte wirksam verhindert und diesen auch nicht in irgendeiner Weise für seine eigenen Zwecke nutzt.

Zur sicheren Weiterleitung an den dem intermediären Netzwerkknoten nachfolgenden Netzwerkknoten (zum Beispiel Netzwerkknoten C) wird der quantensichere Schlüssel in dem ausgangsseitigen Verschlüsseler/Entschlüsseler des intermediären Netzwerkknotens bitweise XOR-verknüpft mit einem Quantenschlüssel, welcher durch Anwendung des QKD-Prinzips (Nutzung des QKD-Servers, des Quantenkanals und des zugehörigen Management-Links) als gemeinsamer Schlüssel bei dem intermediären Netzwerkknoten und bei dem nachfolgenden Netzwerkknoten vorliegt. Der die entsprechende, durch bitweise XOR-Verknüpfung gebildete Bitsequenz empfangende nachfolgenden Netzwercknoten (Netzwerkknoten C) kann schließlich durch abermalige bitweise XOR-Verknüpfung der empfangenen Bitsequenz mit dem bereits schon zuvor genutzten gemeinsamen Quantenschlüssel (QKD-Schlüssel) aus dieser den zu übertragenden quantensicheren Nutzschlüssel extrahieren.

Zur Aushandlung von PQC-Schlüsseln und für das Signieren von Nachrichten mittels PQC sind bereits mehrere Verfahren bekannt geworden. Da es sich bei diesen PQC-Verfahren zur Aushandlung eines gemeinsamen Schlüssels und zum Signieren von Nachrichten um eine noch verhältnismäßig neue technische Lösung handelt, sind allenfalls erst einige davon schon in gewisser Weise etabliert. Ungeachtet dessen sollen nachfolgend die vorstehenden Ausführungen vervollständigend, jedoch ohne Anspruch auf Vollständigkeit, insoweit bekannt gewordene Verfahren genannt werden.

### Verfahren zur PQC-Verschlüsselung

"BIKE1-L1-CPA", "BlKE1-L3-CPA", "BIKE1-L1-FO", "BlKE1-L3-FO", "Kyber512", "Kyber768", "Kyber1024", "Kyber512-90s", "Kyber768-90s", "Kyber1024-90s", "LEDAcryptKEM-LT12", "LEDAcryptKEM-LT32", "LEDAcryptKEM-LT52", "NewHope-512-CCA", "NewHope-1024-CCA", "NTRU-HPS-2048-509", "NTRU-HPS-2048-677", "NTRU-HPS-4096-821", "NTRU-HRSS-701", "LightSaber-KEM", "Saber-KEM", "FireSaber-KEM", "BabyBear", "BabyBearEphem", "MamaBear", "MamaBearEphem", "PapaBear", "PapaBearEphem", ,FrodoKEM-640-AES", "FrodoKEM-640-SHAKE", "FrodoKEM-976-AES", "FrodoKEM-976-SHAKE", "FrodoKEM-1344-AES", "FrodoKEM-1344-SHAKE", "SlDH-p434", "SlDH-p503", "SlDH-p610", ,SIDH-p751", "SlDH-p434-compressed", "SlDH-p503-compressed", "SlDH-p610-compressed", "SlDH-p751-compressed", "SlKE-p434", "SlKE-p503", "SIKE-p610", "SIKE-p751", "SIKE-p434-compressed", "SIKE-p503-compressed", "SlKE-p610-compressed", "SIKE-p751-compressed".

### PQC-Signierverfahren

"DlLlTHlUM_2", "DlLlTHlUM_3", "DlLlTHlUM_4", "MQDSS-31-48", MQDSS-31-64", SPHINCS+-Haraka-128f-robust", SPHINCS+-Haraka-128f-simple", "SPHINCS+-Haraka-128s-robust", "SPHINCS+-Haraka-128s-simple", "SPHINCS+-Haraka-192f-robust", "SPHINCS+-Haraka-192f-simple", "SPHINCS+-Haraka-192s-robust", "SPHINCS+-Haraka-192s-simple", "SPHINCS+-Haraka-256f-robust", "SPHINCS+-Haraka-256f-simple", "SPHINCS+-Haraka-256s-robust", "SPHINCS+-Haraka-256s-simple", "SPHINCS+-SHA256-128f-robust", ,SPHINCS+-SHA256-128f-simple", "SPHINCS+-SHA256-128s-robust", "SPHINCS+-SHA256-128s-simple", "SPHINCS+-SHA256-192f-robust", "SPHINCS+-SHA256-192f-simple", "SPHINCS+-SHA256-192s-robust", "SPHINCS+-SHA256-192s-simple", "SPHINCS+-SHA256-256f-robust", "SPHINCS+-SHA256-256f-simple", "SPHINCS+-SHA256-256s-robust", "SPHINCS+-SHA256-256s-simple", "SPHINCS+-SHAKE256-128f-robust", "SPHINCS+-SHAKE256-128f-simple", "SPHINCS+-SHAKE256-128s-robust", "SPHINCS+-SHAKE256-128s-simple", "SPHINCS+-SHAKE256-192f-robust", "SPHINCS+-SHAKE256-192f-simple", "SPHINCS+-SHAKE256-192s-robust", "SPHINCS+-SHAKE256-192s-simple", "SPHINCS+-SHAKE256-256f-robust", "SPHINCS+-SHAKE256-256f-simple", "SPHINCS+-SHAKE256-256s-robust", "SPHINCS+-SHAKE256-256s-simple",m "picnic_L1_FS", "picnic_L1_UR", "picnic_L3_FS", "picnic_L3_UR", "picnic_L5_FS", "picnic_L5_UR", "picnic2_L1_FS", "picnic2_L3_FS", "picnic2_L5_FS", "qTesla-p-I", "qTesla-p-lll".

## Patentansprüche

1. Verfahren zur Übertragung quantensicherer Schlüssel zwischen einem ersten Netzwerkknoten (1) und einem zweiten Netzwerkknoten (2), welche jeweils mit Mitteln (4, 5) zur Erzeugung quantensicherer Schlüssel ausgestattet, jedoch untereinander nicht über einen Quantenkanal direkt verbunden sind, wobei mindestens ein quantensicherer Nutzschlüssel, nämlich mindestens eine in einem der Netzwerkknoten (1, 2) erzeugte, später zur Verschlüsselung zwischen den Netzwerkknoten (1, 2) übertragener Daten dienende Zufallszahl RND, von dem diesen Nutzschlüssel erzeugenden Netzwerkknoten (1, 2) an den jeweils anderen Netzwerkknoten (2, 1) über einen Übertragungspfad mit mindestens einem intermediären Netzwerkknoten (3) übertragen wird und wobei zwischen auf dem Übertragungspfad einander unmittelbar benachbarten Netzwerkknoten jeweils ein Quantenkanal (10, 11) zum Austausch von QKD-Schlüsseln, nämlich von nach einem QKD-Verfahren erzeugten quantensicheren Schlüsseln ausgebildet ist, **dadurch gekennzeichnet, dass** der mindestens eine Nutzschlüssel zwischen zwei auf dem Übertragungspfad in der Übertragungsrichtung des mindestens einen Nutzschlüssels einander folgenden Netzwerkknoten jeweils mit einer Bitsequenz übertragen wird, die durch Verknüpfung des mindestens einen Nutzschlüssels mit einem zuvor zwischen den Netzwerkknoten (1, 2) nach einem PQC-Verfahren, das heißt einem Verfahren der Post Quantum Cryptography, ausgehandelten PQC-Schlüssel sowie mit einem QKD-Schlüssel, nämlich einem nach einem QKD-Verfahren erzeugten, gemeinsamen quantensicheren Schlüssel der beiden einander folgenden Netzwerkknoten gebildet wird, wobei nur der den mindestens einen Nutzschlüssel aussendende Netzwerkknoten (1, 2) und der für dessen Empfang bestimmte Netzwerkknoten (2, 1) über den vorgenannten PQC-Schlüssel verfügen, so dass der mindestens eine Nutzschlüssel innerhalb eines jeden intermediären Netzwerkknotens (3) stets nur als durch Verknüpfung mit dem genannten PQC-Schlüssel gebildete Bitsequenz vorliegt und übertragen wird.

2. Verfahren nach Anspruch 1, wobei der mindestens eine Nutzschlüssel von dem ihn erzeugenden Netzwerkknoten (1) an den für seinen Empfang bestimmten Netzwerkknoten (2) über einen Übertragungspfad mit einem intermediären Netzwerkknoten (3) übertragen wird, indem
a.) der mindestens eine Nutzschlüssel von dem ihn erzeugenden und aussendenden Netzwerkknoten (1) an einen bezogen auf die Übertragungsrichtung des mindestens einen Nutzschlüssels eingangsseitigen Verschlüsseler/Entschlüsseler (6) des intermediären Netzwerkknotens (3) mit einer Bitsequenz übertragen wird, welche von dem den mindestens einen Nutzschlüssel aussendenden Netzwerkwerkknoten (1) durch eine bitweise XOR-Verknüpfung des mindestens einen Nutzschlüssels mit einem nach einem QKD-Verfahren erzeugten, bei dem Netzwerkknoten (1) und bei dem intermediären Netzwerkknoten (3) als gemeinsamer Schlüssel vorliegenden QKD-Schlüssel sowie mit einem zuvor zwischen den Netzwerkknoten ausgehandelten PQC-Schlüssel gebildet wird,
b.) die gemäß a) gebildete Bitsequenz von dem sie empfangenden eingangsseitigen Verschlüsseler/Entschlüsseler (6) des intermediären Netzwerkknotens (3) abermals mit dem bereits im Schritt a) verwendeten gemeinsamen, sowohl bei dem Netzwerkknoten (1) als auch bei dem intermediären Netzwercknoten (3) vorliegenden QKD-Schlüssel XOR-verknüpft und anschließend die hierbei entstehende Bitsequenz innerhalb des intermediären Netzwerkknotens (3) an einen ausgangsseitigen Verschlüsseler/Entschlüsseler (6') des intermediären Netzwerkknotens (3) übertragen wird,
c.) durch den ausgangsseitigen Verschlüsseler/Entschlüsseler (6') des intermediären Netzwerkknotens (3) aus der von ihm empfangene Bitsequenz durch deren bitweise XOR-Verknüpfung mit einem als gemeinsamer Schlüssel bei dem intermediären Netzwerkknoten (3) und bei dem für den Empfang des mindestens einen Nutzschlüssels bestimmten Netzwerkknoten (2) vorliegenden QKD-Schlüssel eine neue Bitsequenz gebildet und von dem intermediären Netzwercknoten (3) an den für den Empfang des mindestens einen Nutzschlüssels bestimmten Netzwerkknoten (2) ausgesendet wird,
d.) der mindestens eine Nutzschlüssel durch den für seinen Empfang bestimmten Netzwerkknoten (2) aus der durch diesen Netzwerkknoten (2) von dem intermediären Netzwerkknoten (3) empfangen Bitsequenz extrahiert wird, durch jeweils bitweise XOR-Verknüpfung dieser Bitsequenz mit einem nach einem QKD-Verfahren erzeugten, bei dem Netzwerkknoten (2) und bei dem intermediären Netzwerkknoten (3) als gemeinsamer Schlüssel vorliegenden QKD-Schlüssel sowie mit dem zwischen den Netzwerkknoten (1, 2) ausgehandelten PQC-Schlüssel.

3. Verfahren nach Anspruch 1 oder 2, **dadurch gekennzeichnet, dass** der PQC-Schlüssel zwischen den beiden Netzwerkknoten (1, 2) unter Nutzung eines Encapsulation Algorithmus ausgehandelt wird.

4. Verfahren nach einem der Ansprüche 1 bis 3, **dadurch gekennzeichnet, dass** die beiden den mindestens einen Nutzschlüssel über den mindestens einen intermediären Netzwerkknoten austauschenden Netzwerkknoten (1, 2) sich vor der Aushandlung eines oder mehrerer PQC-Schlüssel gegenseitig unter Anwendung eins PQC-Signierverfahrens authentifizieren.

5. Verfahren nach einem der Ansprüche 1 bis 3, **dadurch gekennzeichnet, dass** die beiden den mindestens einen Nutzschlüssel über den mindestens einen intermediären Netzwerkknoten austauschenden Netzwerkknoten (1, 2) sich untereinander mittels PQC-Zertifikaten, das heißt unter Einsatz mittels Verfahren der Post Quantum Cryptography erzeugter Zertifikate authentifizieren.

6. Verfahren nach einem der Ansprüche 1 bis 3, **dadurch gekennzeichnet, dass** die beiden den mindestens einen Nutzschlüssel über den mindestens einen intermediären Netzwerkknoten austauschenden Netzwerkknoten (1, 2) sich mittels PQ hybrider Zertifikate authentifizieren.

7. Verfahren nach einem der Ansprüche 1 bis 6, **dadurch gekennzeichnet, dass** ein erster zwischen den Netzwerkknoten (1, 2) übertragener Nutzschlüssel verwendet wird, um weitere in einem der beiden ersten Netzwerkknoten (1, 2) quantentechnisch erzeugte Nutzschlüssel zu verschlüsseln und über einen klassischen Kanal an den jeweils anderen dieser beiden Netzwerkknoten (2, 1) zu übertragen.

8. Verfahren nach einem der Ansprüche 1 bis 7, **dadurch gekennzeichnet, dass** der oder die Nutzschlüssel durch einen der Netzwerkknoten (1, 2) mittels eines Quantenzufallszahlengenerators erzeugt wird oder werden.
